## Europäisches Patentamt

(19) **European Patent Office**

**Office européen des brevets**

(11) Publication number: **0 109 306**
**B1**

(12) **EUROPEAN PATENT SPECIFICATION**

(45) Date of publication of patent specification: **01.02.89**

(51) Int. Cl.⁴: **G 06 F 12/08**

(21) Application number: **83306959.4**

(22) Date of filing: **15.11.83**

(54) Cache memory apparatus for computer.

(30) Priority: **15.11.82 US 441818**

(43) Date of publication of application:
**23.05.84 Bulletin 84/21**

(45) Publication of the grant of the patent:
**01.02.89 Bulletin 89/05.**

(84) Designated Contracting States:
**DE FR GB IT**

(56) References cited:
**EP-A-0 080 878**

**IBM TECHNICAL DISCLOSURE BULLETIN, vol. 25, no. 4, September 1982, pages 2073-2074, New York, US; J.H. CHRISTIAN et al.: "Local sector generation"**

**IBM TECHNICAL DISCLOSURE BULLETIN, vol. 26, no. 2, July 1983, pages 454-456, New York, US; J.L. ISKIYAN et al.: "Rotational position identification"**

**ELECTRONICS INTERNATIONAL, vol. 55, no. 3, February 1982, pages 155-159, New York, US; W. HUGELSHOFE et al.: "Cache buffer for disk accelerates minicomputer performance"**

(73) Proprietor: **STORAGE TECHNOLOGY CORPORATION**
**2270 South 88th Street P.O. Box 98**
**Louisville Colorado 80027 (US)**

(72) Inventor: **Moreno, Robert J.**
**5169 Holmes Place**
**Boulder Colorado (US)**
Inventor: **Trede, Brian E.**
**1215 Delphi Drive**
**Lafayette Colorado (US)**
Inventor: **Schmidt, Robert W.**
**1245 Doric Drive**
**Lafayette Colorado (US)**

(74) Representative: **Pears, David Ashley et al**
**REDDIE & GROSE 16 Theobalds Road**
**London WC1X 8PL (GB)**

**Description**

The present invention is concerned with cache memory apparatus for a data processing system in which a central processing unit processes data records stored on magnetic disk units, comprising a solid-state cache memory including means for storing a table of emulated track positions each representing the equivalent rotational position at which data records, stored in the cache memory, are stored on a track of a magnetic disk. The invention is related to that described in our published European application EP—A—0 080 878 which forms part of the state of the art solely by virtue of Art 54(3) EPC. In this prior application data is cached track by track but without waiting for the beginning of track index mark. The track position at the start of transfer is latched in a first register. A second register is zeroized at the beginning of the track and incremented as bytes are transferred. When the register contents match a complete track has been transferred.

The purpose of any caching technique is to reduce significantly the average time required for a record sought to be transferred to the main memory of the host computer. This is the purpose of the invention disclosed in our published application EP—A—0 080 875 which also forms part of the state of the art solely by virtue of Art 54(3) EPC. The present invention relates to further improvements in this area.

Communication from a host computer to a disk memory is generally made via a "channel" which comprises a defined set of signal connections over which must pass all information, including data as well as commands, control signals, status signals, request signals and so on. If memory apparatus is to be marketable, it must "interface" or mate directly with a channel identical with those with which prior memory apparatuses have mated, thus being "plug compatible" with the host computer.

It is an object of the present invention to provide an improved cache memory apparatus which is "plug-compatible" with a prior art host computer.

Similarly, it is desirable if not commercially requisite that any data subunit shall not require modification to the host computer's programming instructions or "software" upon connection, i.e. that it be "software-transparent" to the host.

It is also an object of the present invention to provde cache memory apparatus which provides improved performance as noted above, while being software-transparent to the host.

Occasionally, it is necessary to convert a channel program that was operating on a track image in cache memory (a frame) to operating on the actual track on the disk; that is, it becomes necessary to read a portion of a track from the disk, rather than the cache, or to write to a track which has been cached. In each case, it is necessary to recreate the specific record and field orientation that existed in cache before continuing the channel program with records from the disk track.

The need for returning a channel program to disk arises in the following situations:

1) an error prevents data from being accessed in cache memory;

2) a write command is received in the channel program and it is deemed undesirable to write to cache memory; or

3) a sequential track required during multi-track processing is not located in cache memory.

In the prior art, this was not always possible. Examples of related prior art systems include the Storage Technology Corporation 4000/4305 "solid-state disk" system, in which a solid-state memory effectively mimicked a magnetic disk system and the Storage Technology Corporation 8880/8650 disk system.

The 4000/4305 solid-state disk system used a track remaining count which is similar to the emulated track position (ETP) of this invention. However, this track remaining count was not used for transferring orientation from a frame to a disk track; no magnetic disk memory was included in that system.

The 8880/8650 disk system uses a reorient counter that counts an approximate full track revolution starting from the beginning of a record. If the 8880 director encounters errors reading a record, then the reorient counter in the device informs the director when the same record is about to pass under the read/write head again. This technique allows positive reorientation on a specific record on disk, but requires that orientation had been previously established on the disk.

IBM Technical Disclosure Bulletin Vol. 25 No. 4, September 1982, describes at pages 2073 and 2074 a local sector generator in a cached peripheral memory apparatus having a direct-access storage device backup store which is addressable by device, track and rotational position or sector. The host computer transmits a device address, track and record number to the memory apparatus. If a directory associated with the cache indicates that the record is not in the cache, a translator translates the record number into the corresponding sector value which is then applied by access circuits to the indicated direct-access storage device and the data from the access track is transferred to the cache and thence to the host. For fixed length records, the translator is a table look-up. For variable length records, the translator contains a complete table showing the beginning positions of the records stored in the direct-access storage devices.

It is an object of the present invention to perform an accurate reorientation from the records stored in cache memory to the same records stored on the disk track within a single revoluion of the disk, without necessarily waiting for the index mark on the disk track to provide reorientation.

According to the present invention, cache memory apparatus of the type defined initially hereinbefore is characterised by means for reorienting the operation of a program from records stored in the cache memory to corresponding records stored on a disk unit in response to the emulated track position of the record with respect to which the reorientation occurs, the means for reorienting including means for selecting from the table the emulated track position of the record just prior to the record stored on disk which is to be processed by the program, whereby the orientation is performed within one revolution of the magnetic disk on which the corresponding records are stored.

In the preferred practice of the invention, reliable orientation of the cache memory with respect to the disk drive is maintained by generating a table of "emulated track position" (ETP) values equal to the approximate addresses on disk of the records being stored in the cache. The first ETP is the starting address which corresponds to the beginning address of the first record stored in the cache. The first ETP is thus a measure of the number of bytes from the index mark on the disk at which the starting point of the cached data was located. This value is saved as a "target" ETP, and is used to determine when a full track of data has been read. The next record's count field information is read and saved in a second register. The records on the track between the current orientation point and the index point can then be read. When the disk's index mark is reached, a current ETP value is initialized to zero in a third register. The data records are read from the index into the cache. As each field is read, the current ETP value is updated to count the number of bytes that have passed. After each incrementation the current ETP is compared to the target ETP. When it is greater than or equal thereto, the count field information from the last record read is compared against that stored in the storage director. If they are not equal, record reading continues. If they are, an indication is provided that the entire track has been read.

In accordance with the present invention, the ETP values can be used to reliably retransfer orientation of data being read from the cache back to the disk drive in the event of an error occurring in the middle of a read operation, or in the event of other conditions previously discussed which require returning the channel program to disk. In carrying out the invention, the ETP value for the record preceding the record upon which reorientation is to be obtained, i.e. the first record called for by the channel, is selected from the table of ETP values. The selected ETP value is converted into an equivalent sector number and a residual value by dividing the emulated track position by the number of bytes per sector, which is fixed. This produces an equivalent sector value which is supplied to the disk drive control module, where it is compared to the sector signal produced by the disk drive representing the sector currently rotating under the heads. When the desired sector is juxtaposed under the heads, the control module produces an interrupt signal which results in the director enabling the reading of records from disk after a further delay. The length of this further delay is controlled by the residual value, to align the beginning of reading with the correct record in the sector previously identified. The director enables the reading of address marks during a time period or "window" at the termination of the delay. In this manner, accurate detection of the desired record count field is obtained. Reliable and accurate reorientation is thus performed.

The invention will be described in more detail, by way of example, with reference to the accompanying drawings, in which:

Fig. 1 is a block diagram of a system in which the invention may be used;

Fig. 2 shows the data and control paths in a simplified view of the system of Fig. 1;

Fig. 3 shows in more detail connections between the directors, the file interface unit, and the cache buffer and manager units;

Figs. 4A and 4B depict the cache manager operations during a stage to cache and during reorientations;

Fig. 5 shows a sample header format;

Fig. 6 depicts the header, home address, count and data fields of a disk track which has been stored in cache memory; and

Figs. 7A—7C are timing diagrams respectively showing the home address, count and data fields as read from a disk track, the track sector signal, and the sector value signal.

As discussed above, the cache buffer memory system of the present invention is designed to operate in accordance with a prior art host computer in such a manner that no modification of the host's hardware or software is required. In particular, the cache buffer memory system of the invention should attach to the host computer through a conventional memory channel without modification; that is, it should be plug-compatible with, and software-transparent to, the host. In a preferred embodiment, the cache memory system is designed to operate in accordance with an IBM Corporation computer (or other computer plug-compatible with the IBM unit) of the class in which the channel is defined by IBM Publication GA22-6974-4 entitled, "I/O Interface Channel to Control Unit". This volume describes the channel specifications for plug-compatible memory systems. In a particularly preferred embodiment, the cache buffered memory system is comprised in a disk drive memory system of the type previously sold by the present applicants, reconfigured to include a solid-state random access memory (RAM) which can be included within the enclosure containing the disk drive storage director unit. Indeed, the addition of the cache feature may be made in such a manner as to be field-installable on previously shipped customer units at minimal additional complexity and cost, while substantial performance improvements may be realized.

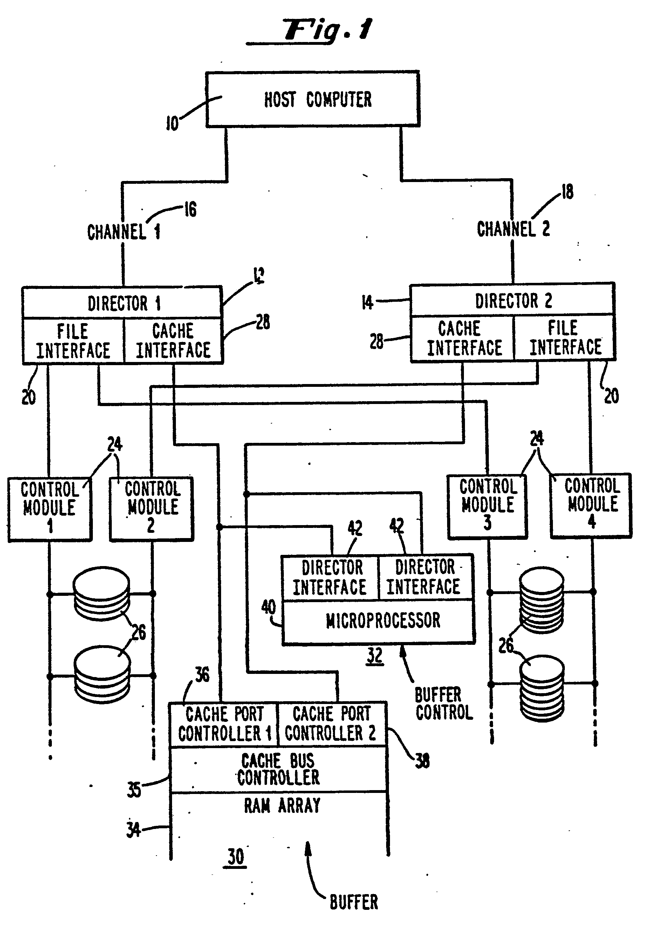

Referring now to Fig. 1, an overall view of a data processing system comprising a host computer system as defined above and a cache buffered memory system is shown. The host computer 10 is connected to a pair of storage directors 12 and 14 through channels 16 and 18, respectively. The directors and channels can be multiplied further, as well known in the art. Each director comprises a file interface 20 through which data is passed, via control modules indicated generally at 24 and thence to disk drive units indicated generally at 26. As indicated schematically in the drawing, the disk drives 26 may be of various types. The control modules 24 to which the disk drives 26 are connected serve to interface varying types of disk drives with directors 12 and 14 such that different types of disk drives 26 together with appropriate control modules 24 can be used in conjunction with identical directors. As described thus far, the system of Fig. 1 is conventional. In practising the present invention, the directors 12 and 14 are modified to additionally comprise cache interface units 28 which serve to interface the directors 12 and 14 with a cache buffer memory system according to the invention, which as schematically shown comprises a buffer unit 30 and a buffer control unit or manager 32. The buffer unit 30 has as its chief function the storage of data having been "staged" in anticipation of being required by the host computer. When the staged data is called for it can be very quickly read under control of a cache bus controller 35 out of a solid-state random access memory (RAM) array 34, the heart of the buffer unit, through one of a plurality of cache port controllers 36 and 38, respectively, communicating with the directors 12 and 14, and thence to the host. This is generally a considerably faster process than reading the data directly from a disk drive unit 26 as there is no latency time involved in the use of the random access memory 34, as there is in the case of the disk memories 26.

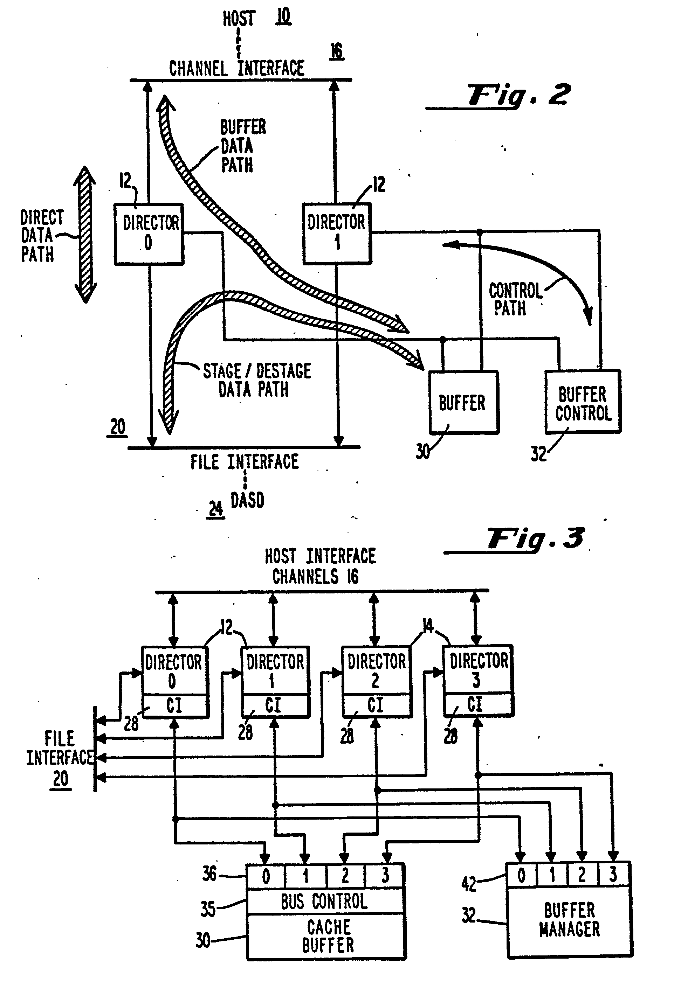

Referring now to Fig. 2 a schematic view is shown of the data flow between the file interface 20 and the host interface 16 in the cache buffered memory system. The typical prior art data path directly from the channel interface 16 through a director 12 and via a file interface 20 to a disk drive, sometimes termed "DASD" for "direct access storage device" 24 is shown. This data path is preserved and is used, as will be discussed below, for all ordinary read operations, when there is an error in the cache buffer, and during ordinary write operations. In a staged read operation, however, data is read from DASD 24 passes from the file interface 20 through the director 12 and thence to the cache buffer 30, under the control of the buffer manager unit 32. When the host 10 then calls for the data actually to be supplied to it, the data passes out of the buffer 30 through the director 12 and through the channel interface 16 to the host 10. It will be appreciated that parallel connection is provided between the two directors 12, the channels 16, the buffer 30 and the file interface 20. This is to say, data may pass from a first director 12 from the buffer 30 enroute to the channel interface 16 after having been passed from DASD 24 to buffer 30 for staging by a second director 12. Such "paralleling" of directors 12 also permits data to move from the cache 30 to the host 10 even if the director 12 used to stage data into the cache buffer 30 then takes up another task before the data is actually called for by the host 10.

In this connection, it will be appreciated that the present IBM channel design provides a sequence of commands e.g. before an actual readout operation takes place. Typically, the host will issue a "START I/O" command to the channel. The channel in processing the "channel program" will issue a "SEEK" command to the director which will then cause the disk drive's head moving apparatus to access the proper track of the disk. When this has been done a signal is passed back to the channel indicating that the head is in position. After receipt of the "READ" command, the disk drive examines the count and key data fields for that containing the record of interest; when it is juxtaposed to the read/write head, the record is read via the director to the host's main memory for processing. In the present invention, the same practice is followed upon receiving of a first read command. However, the channel program is also examined by the cache manager 32 for indications that the successive record is likely also to be called for by the host. If so, the buffer manager 32 then causes the director to have the succeeding record of records stored on the disk copied into the cache buffer 30 so that subsequent read commands for successive records can more quickly be complied with, preferably making use of the invention of EP—A—0080876. In a particularly preferred embodiment, data is stage from the disk into the buffer an entire track at a time. Such disk tracks typically comprise up to about 100 records, i.e. blocks of data separated from one another by gaps and identified by headers comprising index marks and the like. The 100 records may in turn be part of a disk file which may occupy many tracks, or in the case of large data files, up to several complete disk units.

As noted above, it is desirable that the cache buffered memory system be a field installable modification to a pre-existing product thus adding minor additional cost and complexity to a memory system while permitting substantial performance advantages.

Fig. 3 shows one way in which the cache buffer can be added to a preexisting product while satisfying these conditions. Fig. 3 shows four directors 12 and 14 each connected to a host computer via channel 16. As in the prior art the directors 12 and 14 are each connected by way of the file interfaces 20 to the control modules (not shown) which, for example, convert the director commands to forms suitable for accessing a particular type of disk and so forth. Thus, the control modules are selected in accordance with the type of disk storage media to which they are to be connected, while the directors 12 and 14 are the same regardless of the type of disks used. Such directors and control modules may be as at present found in commercial products of the applicants, for example, in the Storage Technology Corporation Model 8880 disk controller and Model 8650 disk drive units respectively. To each director 12, 14 is added a cache interface unit 28 which is connected to a buffer interface 36, connected to the bus controller 35 of the cache buffer unit 30. Control lines are also connected to the cache interface lines which run to the control interfaces 42 of the buffer manager 32. Thus, to the preexisting Model 8880 unit one need only add cache interface cards to the directors, and install the cache buffer and buffer manager units. Such an installation can be made to preexisting units in the field within a reasonable period of time and at reasonably modest additional cost.

It will be appreciated from inspection of Fig. 3 that the cache buffer 30 is connected in parallel to each of the directors 12, 14 as is the buffer manager 32 which controls flow of data between the directors and the cache buffer. This is in distinction to, for example, a cache arrangement proposed by Memorex Corporation in which a single cache per director is interposed between the control module and the director. This arrangement has several disadvantages; one of the prime disadvantages is that more caches are required. While for a given performance level such single director caches can be made somewhat smaller, they are then less likely to be fully utilized. Moreover, provision of a separate cache for each director does not allow two or more directors simultaneous access to the cache which is desirable. This alternate path access is very desirable in a highly active system to avoid path busy conditions. Such versatility is made possible by the arrangement of the invention as illustrated in Fig. 3.

As discussed above, in a preferred embodiment of the invention, it is configured as an add-on subsystem to a previously existing product, namely the Model 8880 disk controller manufactured by the applicants, Storage Technology Corporation. In this embodiment, the director 12 performs the functions of the director in the Model 8880; that is, it directs and interfaces to the control modules (which, for example, demultiplex the data to serial form, for writing it to a disk) thus directly interfacing the drives themselves to the host channels by converting the data from the form in which it is stored on disk to one to which the channel can respond. The director 12 performs the additional functions of buffered data transfer, and execution of the stage operation, i.e. writing of data from the disk 26, (Fig. 1) via the control module 24 into the cache buffer 30. The director 12 also provides buffer error recovery systems, which amount to bypassing of the buffer in favour of direct transfer of data from the disk 26 to channel interface 16, and the director communicates with the buffer manager 32. This is to say, the director 12 performs switching functions, controlling the flow of data between the file interface 20, to which the disk units 26 are connected, the cache buffer 30 and the channel interface 16 to which is connected the host computer. These switching functions are controlled in accordance with instructions received from the buffer manager 32. Thus, in the preferred embodiment in which the memory system of the invention is added on to a preexisting STC 8880 product, the buffer manager 32, the cache buffer 30 and suitable control and data lines are added, so that the director 12 controls the data path in accordance with the instructions of the buffer manager 32.

As noted above, the buffer manager 32 determines whether a particular data record or series of records is likely to be called for by the host and accordingly decides whether or not to "stage" it into the buffer 30 in advance of its actually being called for by the host in order to save access time. (EP—A—0080876). Broadly, the decision involves examining the channel program data to look for track jump orders, end-of-file indicators, write indicators and the like, events unlikely to be encountered during reading of sequential data sets.

The cache buffer 30, which performs the function of storing the data, is preferably organized by frames. In a preferred embodiment, the cache is subdivided into "domains" of a fixed size chosen such that the individual frames which correspond to logical tracks on disk fit as closely to integrally as possible within the domains. This cache space organization scheme is the subject of copending published application EP—0080877. The cache buffer 30 also stores the control information or header which defines each individual variable length logical frame by count, key and data fields as noted above.

The buffer manager 32 in the preferred embodiment comprises a microprocessor 40 (Fig. 1) and performs the manager function as follows. The chief function of the buffer manager 32 is to manage the space of the cache, that is, to direct the storage of data within the cache memory 30 and to retain the locations at which the specific tracks are stored in a "frame directory". The buffer manager 32 similarly schedules stage operations and communicates its instructions to the director 12. The buffer manager 32 also performs error management and recovery functions, which include switching the flow of data directly from the disk to the channel interface in the case of a catastrophic error.

After a first record has been determined to be part of a sequence of records, the remainder of the disk track is then desirably cached. This presents problems in address control and in correlation of the cached data with the data received or written on disk. In particular, inasmuch as the host's subsequent commands will be in terms of disk sector addresses and record numbers, not cache storage locations, accurate and fool-proof means must be provided to ensure that the proper correlation is maintained. Moreover, it is also necessary to provide means for determining when a full track has been staged into the cache so that the staging operation can be terminated at precisely the correct time.

It would be a simple matter, of course, to begin staging at the index mark which is recorded at one location on each disk track and continue until the index mark was once again encountered. However, ordinarily the first record on the track will be that which is first accessed by the host, and hence most of the track will not have been read to the host at the time the determination to stage the remainder of the track is made. Therefore, the time taken for the disk to rotate the remainder of a revolution would be consumed while waiting for the index mark once again to be juxtaposed to the read/write head. This waste of time is clearly undesirable.

Additional constraints are posed by the requirement that varying sizes of disk tracks be supported by the cache memory. This prevents the cache memory from being divided into subportions of "frames" of sizes equal to a particular disk track size and then simply assigning the starting addresses of each of the frames to the contents of the disk track as they are staged. In the preferred embodiment, the cache memory system is instead divided into domains which are sized to contain substantially integral numbers of frames of varying sizes to accommodate varying disk track sizes. The domains themselves can be reallocated to other types of frames when desired. (EP—A—0080877).

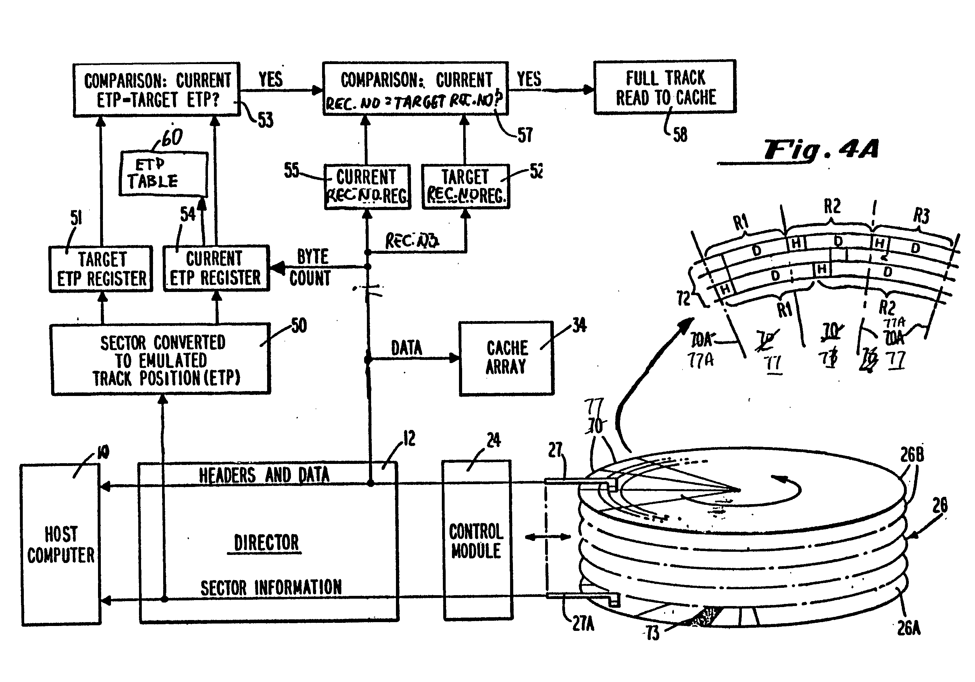

Fig. 4A will be referred to here to explain the way in which correspondence between the place on the disk at which a track of data to be stored in the cache is located and its address in the cache is maintained. A disk pack 26 is shown in Fig. 4A. The disk pack may comprise a plurality of data storage disks 26B which are accessed by read/write heads 27 and a dedicated disk 26A which contains permanently encoded servo and sector identification information. This information is read by a dedicated head 27A. As can be seen from Fig. 4A and the enlarged portion thereof shown above, each data surface 26B is divided into a plurality of sectors 77. Circumferentially extending tracks 72 extend across the sector boundaries 77A. As is usual, each track may be divided into one or more records indicated as R1, R2, etc,. which each in turn comprise a "header", i.e. count field, indicated at H and data indicated by D. As shown, the record boundaries do not necessarily coincide with the sector boundaries 77A. The count field information contains, for example, control information such as the length of the following data record, synchronization and address marks and is used to identify the specific record within the sector. Accordingly, in order to locate a particular record on disk, one must know the disk surface, the track number, the sector number, and the record number, the last of which is to be found within the count field. The first sector on the disk is located by an index mark 73 permanently written to the servo disk 26A from which sector numbers may be counted.

If it is desired to cache a track of data from a disk to a cache memory, and if a portion of that track has already been read to the host computer, it would be preferable to begin caching with the remainder of the track, rather than wait for the index mark 73 once again to be juxtaposed to the read/write head 27. Accordingly, when it desired to stage a track to cache, a frame of the appropriate size is selected from the list of available frames of that size and beginning and ending addresses in the cache memory array 34 are then calculated by the cache manager 32 in accordance with the invention of our copending application No. 83306851.3 filed 9.11.83 (publication number EP—A—108 651). Data is then read from the disk to the cache beginning at a starting address. In order that correspondence can be maintained between the data read from the disk (which, as noted, does not begin with the index mark) the current sector address must be stored. The current sector number can be read from the dedicated disk surface 26A using the information coded thereon, as well understood in the prior art. According to the present invention, the sector number is converted to an emulated track position (ETP) within the cache director 12, at 50, and this is stored as the target ETP in a target ETP register 51. This initial ETP is a measure of the number of bytes from the index mark at which staging of data from the disk to the cache 34 was begun. A current ETP register 54 is initialized to zero and is used in building a table of ETP values at 60, each entry representing the relative ETP for a record. The record number within the first count field found is stored in a target record number register 52, also comprised within the cache director 12. Thereafter, reading of the records on the track between the starting position and the index mark proceeds, whereby the data is read into the cache array complete with the count fields. As each record is staged from DASD to cache, the current ETP value is incremented and an entry is made into the ETP table at 60, giving the beginning address for that record. When the index mark 73 is reached, a current ETP register 54 is reset to zero from a value equal to the number of bytes between the index mark and the home address field. The remainder of the records between the index mark and the point at which caching of the data began are then read from the disk to the cache array 34. As each subsequent record is read, the current ETP value in register 54 is incremented to reflect the number of bytes which have passed. Whenever the contents of current ETP register 54 are thus updated by the passage of another record, its value is compared at 53 with that stored in the target ETP register 51 to determine whether the first record staged is once again approaching the read/write head of the disk. When the current ETP is greater than or equal to the target ETP, data has been read from each sector of an entire track of data. When this occurs, the record number (abbreviated REC NO on the drawing) from the current record as comprised in a current record number register 55 to which the record numbers are copied as they pass by the head, is compared at 57 with the record number in the target record number register 52, written to previously as discussed above. When the target record number 52 equals the record number of the current record stored in current record number register 55, it may be concluded that all records in the sector in which staging was started have been read, and accordingly an indication may be provided as at 58 that a full track has been copied to the cache. The entries in the ETP table 60 for records staged prior to encountering the index mark are now adjusted from the relative values originally stored in the ETP table 60 to their actual values. This is required because the exact ETP value for the first record staged is only known after having read all records between the index and the first record. The ETP table 60 may then be copied from the director 12, where it is generated, to the cache array 34, where it is stored together with the data, as discussed further below.

In order to use the "wraparound" method of writing data from disk into cache, whereby the operation can begin wherever convenient, rather than waiting for the index mark to be juxtaposed to the read/write head, the header information written at the beginning of each frame in the cache must comprise means to indicate the relative locations of the records within the frame, so that, for example, when the host later calls for "record 3", there is a directory of cache addresses showing where this record is stored in the cache frame. For example, suppose that there are six records on a given track on a disk drive. The host calls for the first record. It is read directly from the disk to the host. Examination of the channel program by the buffer manager in accordance with EP—A—0080876 reveals that the subsequent records are likely to be called for as well. This determination consumes some rotational time, so that records 3 to 6, beginning with record 3, are read into the cache beginning at a stated beginning address (BOT). When the index mark is reached, the cache director 12 initializes the present emulated track position (ETP) register 54 and proceeds to read the remainder of the track into the cache, ending with record 2. The host will thereafter presumably call for records 2, 3, 4, 5, and 6, though not necessarily at once. In this connection note that the cache memory system design is again governed by the requirement of software-transparency. Here this means that the memory subsystem cannot be designed to respond to a request for the "next" record; it must be capable of responding as if to unrelated commands. Accordingly, later the host may call for, e.g. record 5. The cache director than consults its directory, locates the frame and examines the header, so as to be able to index a cache memory address pointer directly to the beginning of record 5, i.e. without reading through records 2 to 4, which is important if the cache is to operate efficiently.

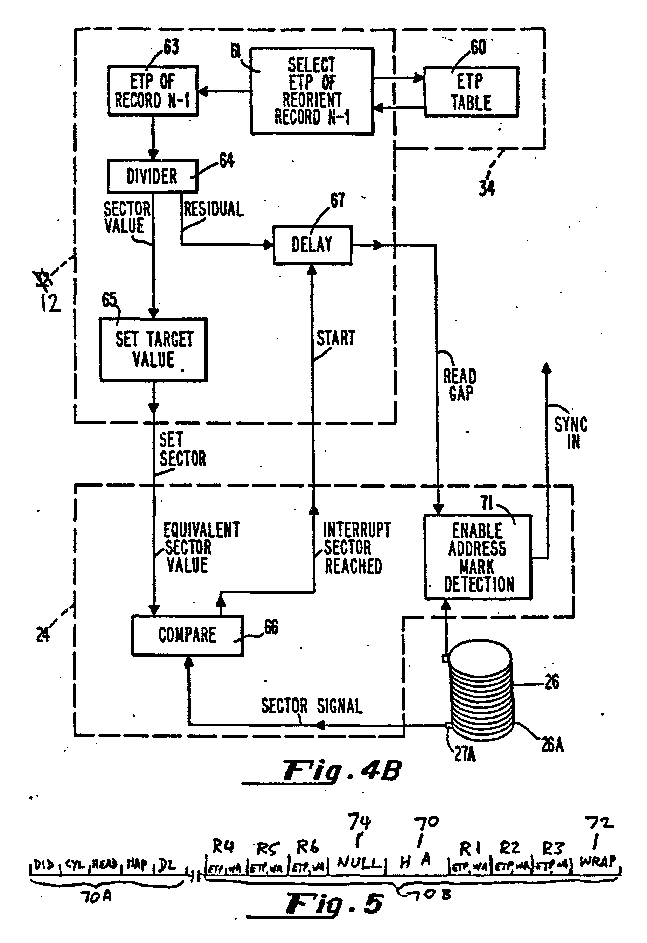

Fig. 5 shows how the header which appears at the beginning of each frame can be organized to provide this wrap around capability. Stated slightly differently, because of the nature of the stage procedure, the records are not written into the cache frame assigned starting with a home address (HA) field. Instead, the stage operation begins with the first available count field in order to minimize the time spent staging. Since the frame header is built as the records are being staged, the header entries will also start with the first available count field instead of the HA entry. To enable searching the header from the logical beginning to the logical end (as opposed to physical beginning to end), the following aids are introduced. Referring now to Fig. 5, there is an HA (home address) pointer HAP saved in a known location in the frame header. This one byte pointer tells which entry in the header is the home address (HA) 70. This is used by the microcode to locate the logical beginning of the track in the cache. This HA pointer is written to the frame when the header is written. A wrap or end of frame entry is shown at 72. The wrap entry has a unique value in order to ensure that it is not mistaken for an ordinary record entry. This entry informs the mirocode to wrap to the beginning of the header to find the remainder of the record entries, i.e. this entry locates the end of the last record in the frame. A null entry is indicated at 74. This is a four byte entry embedded in the header that has the hexadecimal value "00000000". This entry, like the wrap entry, is guaranteed to be unique. The purpose of this entry simply is to signal that the end of the track has been reached. Thus, the header of Fig. 5, wherein the records R4, R5 and R6 appear before the null entry 74 and home address 70, and records 1, 2 and 3 are placed between the home address 70 and the wrap entry 72, indicates that staging of this particular frame began with the fourth record on the track. Record 6 was the last record on the track, after which the null entry was written. Staging continued after staging of the home address pointer, and concluded with records 1, 2 and 3 after which the wrap entry, indicating the last record written to the physical cache frame was written.

Each of the entries for the records R1—R6 as shown comprises an ETP address, indicating the records starting location on the disk measured in bytes from the index mark and a word address "WA" indicating the starting location of the record within the cache memory. Correspondence is thus fully maintained between the locations of each individual record on the disk and in the cache memory. These entries, together with the null, home address, and wrap entries comprise a header data field 70B. Also comprised in the header stored at the beginning of each frame in the cache is a header control field 70A. This comprises three entries, DID, (device identification), CYL (cylinder number of the staged track), HEAD (head number of the staged DASD track). These three entries clearly identify the location on the disk of the entire track stored in the frame. Also stored as part of the header control field 70A is the HAP, which is a pointer to the home address entry in the header data field 70B (the "known location" referred to above) so that if it is desired to locate the home address within the cache, it is not necessary to search through all the records stored previously thereto in the frame. Finally, comprised in the header control field 70A is a DL entry which indicates the length of the header data field. As noted above, one of the objects of the invention is to provide a variable length header for a data field stored in a solid-state array. The DL entry is necessary to indicate the ending of the header data field 70A.

As discussed above, after the entire record has been read from the disk drive into the cache, it is necessary to adjust the ETP values for that portion of the record stored after initiation of the read operation and before detection of the index mark, because the ETP values are not precisely known until the latter time. This may be done in a preferred embodiment of the invention by building the header in the control store conventionally comprised in the director 12. After the track has been entirely read into the cache, the header, complete and adjusted to reflect the exact ETP values for the records first stored, may be copied to the frame (in the cache memory 34) thus freeing the control store for future processing. This approach also provides the advantage that higher speed operations are possible than if the header entries were simultaneously being written to the cache.

It will be appreciated by those skilled in the art that this header format has a distinct advantage that only as many header entries need to be processed as actual records exist on disk in contradistinction to the method of e.g. providing a header entry for each sector.

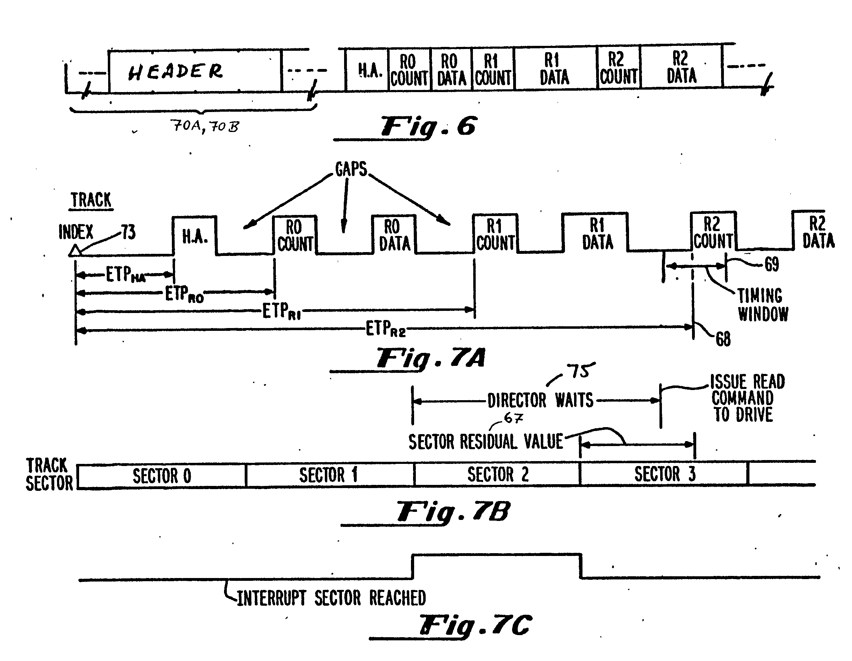

Fig. 6 shows schematically the image of the track, including the header, in the cache. The image begins with the frame header (comprising the header control field 70A and the header data field 70B, of Fig. 5) which contains emulated track position values in bytes for beginning locations of the home address field and for record 0, for record 1, for record 2 and so on. The information staged from the DASD track follows the header.

When the host later desires to read a record stored in cache from disk, due to an error for example, the emulated track position values stored in header data field 70B are used in reestablishing orientation. Fig. 4B shows registers which may be used to establish the orientation and illustrates the interplay between the control module 24 and the director 12 in this operation, while Figs. 7A, 7B and 7C comprise a detailed illustration of the track format and of certain timing diagrams which further explain how the reorientation operation works.

The discussion above in connection with Fig. 4A illustrated how the disk surface is divided into radially extending sectors 77 and circumferentially extending tracks 72. Fig. 7A shows a more detailed view of one of the tracks. The track is deemed to begin with an index mark 73 (found on the servo disk 26A) followed by a home address mark, a gap, followed by a field indicating the length of record 0, "R0 Count", another gap, "R0 Data", another gap, "R1 Count", another gap and so on. Fig. 7B shows a correspondingly scaled diagram of the sectors into which the track is divided. As will be noted, the sectors do not orrespond with the beginnings of the records, nor are there an integral number of records per sector.

As discussed above in connection with Fig. 4A, the typical disk pack with which the invention is designed to be used comprises a number of disk surfaces for the storage of data and a dedicated disk surface 26A which contains permanently encoded sector information. The dedicated disk surface 26A can be used to provide an indication of a sector 77 in the vicinity of a record to be read, but cannot be relied upon to give an absolute indication of the place of beginning of a particular record. In prior art operations when an error was found in trying to locate the count field of a particular data record, it was essential to slip an entire revolution in an attempt to reorient on that same count field once again. If the same error occurred over and over again there was no way to obtain the data stored in the record, i.e. a permanent error was recorded. Recording of the emulated track positions according to the method of the invention provides a way out of this difficulty. One can attempt to orient on the count field of the preceding record on the disk by using its ETP value stored in the header field, instead of looking for the count field of the record sought for. If an orientation can be established on the prior count field, then the succeeding count field will automatically be that of the record which is sought for. Accordingly, one source of permanent errors in disk drives is avoided by the generation of the ETP table according to the invention. It will be appreciated by those skilled in the art that if one desires to reorient operations from a cache to a disk, one must first locate the count field of the record which is, for example, being called for by a host, and that it is typically impossible to reorient on a particular count field in time to immediately supply the record to the host. Accordingly, if one simply output the emulated track position of the record which is to be located, one would have to wait an entire disk revolution before one could begin sending the data from the disk to the channel. Having generated a full table of ETP values, according to the invention, one can instead reorient on the count field of the record preceding that of interest and can therefore begin reading data substantially immediately upon establishing orientation, thus speeding such reorient operations. Accordingly, when it is desired to reorient a read operation from the cache to the disk, the emulated track position of the record preceding the record of interest is used to locate its count field; thereafter the count field of the record sought is detected. This is explained in connection with Figs. 7A to 7C. Assuming that record 2 is to be located, the emulated track position of record 2 is first retrieved from the header data filed 70B comprised in frame header field (Fig. 6). The location is shown on the diagram as $ETP_{R2}$, and, as noted, occurs in sector 3. The sector is determined by dividing the ETP of R2 by the number of bytes per sector, and subtracting 1 from the result. Accordingly, the director looks for the beginning of sector 2 and is enabled at the beginning of sector 2, noted as "Director Waits" at 75 so that the count field of record 2 is thereafter detected, the director is enabled to transfer the data from the disk to the host computer beginning at the data field of Record 2. Accordingly, the "director waits" time begins at the start of sector 2. A timing window 69 is calculated using $ETP_{R2}$, that is, at the point measured in bytes after the index mark, where it is anticipated that Record 2 will begin. Reading is begun, i.e. the "READ" command is issued to the drive, at the end of the director waiting period. At this time, the drive searches for the next count field. When coincidence is detected, reading of the data can begin.

The timing window is shown centered about the $ETP_{R2}$ position in Fig. 7A. Since the beginning of the timing window must precede the desired count field, the timing window is located by calculating the number of whole sectors in the emulated track position and adding additional bytes to locate the center of the count field detection window. In other words, the number of bytes per sector is divided into the emulated track position, so that the remainder, or residual value, is the number of bytes from the beginning of the next succeeding sector, sector 3 in Fig. 7A, about which the timing window is to be centered. After this calculation is performed, a number of bytes equal to half the width of the timing window is subtracted from the value thus derived and it is at this point, determined by the byte count, that the timing window opens, enabling the director to look for the beginning of the R2 Count field. Accordingly, the total number of ETP bytes, i.e. the number of bytes at which the record sought begins, measured from the index mark, is divided by the number of bytes per sector. For example, if the ETP is 325 bytes from the index mark and if a sector is 100 bytes long, then the ETP of the record sought for is 25 bytes past the beginning of the fourth sector (sector 3, counting from sector 0). If the timing window desired is 40 bytes wide, then it should extend from 5 to 45 bytes after the start of sector 3. The dedicated disk 26A is used to locate the beginning of sector 3; when 5 more bytes have passed, the timing window is "opened".

Hardware to implement the operation of the detector during a reorientation operation as just described is depicted in Fig. 4B. Assume that it is desired to reorient on the R2 count field. As indicated at 61, the director selects from ETP table 60 the ETP of the previous record, record R1. (This is designated ETP of record N-1 in Fig. 4B). The desired reorient count field is the one just prior to the field that requires processing by the channel, in this instance the R1 count field. Orienting on the prior count field enables processing by the channel to immediately resume without slipping a full track operation. The value of $ETP_{R1}$ is set into the register 63. It is converted into an equivalent sector value and a residual value by dividing it by the number of bytes per sector in the disk. This conversion is performed by the divider 64. Assume as an example that the $ETP_{R1}$ is 474. That is, 474 bytes are in the gaps, the home address, the R0 count, and the R0 data fields prior to the R1 count field in Fig. 7A. Dividing 474 by 156 (the number of bytes in a sector) gives a quotient of 3 and a remainder (residual value) of 6. The quotient 3 identifies the target sector value as sector 2. (Since the numbering of sectors begins with 0, the third sector is sector 2).

As indicated at 65, the director 12 sets the target sector value to 2, which is the equivalent sector value. The control module 24 of the disk drive compares this equivalent sector value with the sector signal provided from the dedicated surface 26A, as indicated at 66. As in response to a conventional SET SECTOR command, when the heads 27 of the disk pack reach sector 2, the control module produces an INTERRUPT SECTOR REACHED signal as shown in Fig. 7C. In response to the INTERRUPT SECTOR REACHED signal, the director 12 enables the reading of records from the disk after a further delay which is indicated at 67. This delay is calculated from the sector residual value. At the termination of this delay, indicated at the point 68 in Fig. 7A, the director 12 begins reading of records stored on disk to the central processing unit. This is accomplished by detecting the first count field which occurs within a timing window indicated at 69 in Fig. 7A. The timing window is established by enabling the address mark detection circuitry 71 in the drive for a duration of 20 track bytes. Since a count field can only occur every 186 track bytes, if a count field is encountered in this 20 track byte window, detection of the desired R2 count field is assured. A window is necessary for this read operation to ensure that the disk drive reliably detects the count field. When detection occurs, the SYNC IN signal is given.

In this manner, a program which processes data records may be reoriented from cache memory to the disk drive. This has been accomplished by the use of the table of ETP values. It should be noted that one advantage of the table of ETP values is that it allows reorientation even though all of the bytes in the gaps have not been stored in the cache memory. By using the ETP values according to the present invention, reorientation is possible even though there is not a strict correspondence between records on a disk track and the data copied to the cache memory 30.

The functions of the control module 24 are the same as in systems without caching capability, so that the control module need not be modified to perform caching according to this invention.

It will be appreciated that the reorientation of data flow from cache to disk is shown in Figs. 4B and 7. It is essentially the inverse of the process of copying a track to cache as shown in Fig. 4A. In both cases, a sector address is first looked for, and after the proper sector is located, then the header address is compared with a target header stored in a register so as to determine when the correct header has been reached. This is done in the case of reorientation to allow reading or writing data from the disk to commence at the correct point, and in the case of copying data from the disk to the cache (Fig. 4A) to give the indication that a full track has been thus copied. The reorientation process described in connection with Figs. 4B and 7 is slightly complicated by the fact that the sector preceding that containing the record at which reading from the disk is desired to begin must be looked for because the record's starting location on disk cannot be assumed to be coincident with the beginning of the sector within which they are located.

In the event of an error indication generated by the cache managing, it is important that "orientation" or data path establishment be redirected from the cache to the disk device so that the cache can be "cut out" of the data path, thus returning the path to that which would have existed if the cache had never been added to the long-term memory storage system. This must be done as discussed above in such a way that the addition of the cache requires no modifications to the host, i.e. that it be plug compatible and software transparent thereto. Accordingly, when the system of the invention detects an error in the cache system it is inappropriate to terminate the host's request with the indication that the operation cannot be completed. In fact, the operation can be completed on the disk device to which the host's request was ostensibly addressed, thus fulfilling the goal of software transparency mentioned above. The problem with switching the operation to the disk drive is one of ensuring that the operating begins at the correct starting address on disk. Superficially, it would appear that it would be sufficient to compare the record identifier of the disk record supplied by the host against the identifier from the operation in the cache. However, there is no guarantee that all the record identifiers on the track are unique. A data integrity problem could thus be presented. This is overcome according to the present invention by using both the record identifier, which is an integral part of each record, and the ETP value associated with the starting point of the record on a track. Both variables are available at the time the cache is being used to satisfy the host's request.

It will be appreciated that there has been described a method of control of a cache buffer memory which satisfies the needs of the art and objects of the invention listed above. By generating emulated track position information as to each record as data is read from disk into cache, one has available at all times an accurate correlation between disk and present cache address if for some reason it is desired to switch channel orientation back to the disk from the cache. Furthermore, correct maintenance of the ETP register allows one to know accurately when the entire disk track has been read. This in turn permits one to write data from disk to cache without waiting for the index mark to be justaposed to the read/write head. Finally, provision of a frame header generated when the data is written to the cache permits the header to be of a length proportional to the number of records in the cache, while providing a direct correspondence between the location of records in the cache and their locations on disk.

## Claims

1. Cache memory apparatus for a data processing system in which a central processing unit (10) processes data records stored on magnetic disk units (26), comprising a solid-state cache memory (34) including means (60) for storing a table of emulated track positions each representing the equivalent rotational position at which data records, stored in the cache memory (34), are stored on a track (72) of a magnetic disk (26), characterised by means (12, 24) for reorienting the operation of a program from records stored in the cache memory to corresponding records stored on a disk unit in response to the emulated track position of the record with respect to which the reorientation occurs, the means (12, 24) for reorienting including means (61) for selecting from the table (60) the emulated track position of the record just prior to the record stored on disk which is to be processed by a program, whereby the reorientation is performed within one revolution of the magnetic disk on which the corresponding records are stored.

2. Cache memory apparatus according to claim 1, characterised in that the emulated track positions each represent the number of bytes after the index mark on the disk track at which storage of the corresponding record commences.

3. Cache memory apparatus according to claim 1, characterised by means (51) for initially storing an emulated track position corresponding to the sector number of the first record stored in the cache memory, and means (54) for storing a number incremented as each byte is read from a track on a magnetic disk to produce a series of emulated track position values, each representing the number of bytes from the index mark at which the corresponding record stored in the cache memory begins on the disk.

4. Cache memory apparatus according to claim 1, characterised in that the means for reorienting (12, 24) includes means (64, 65) for converting the emulated track position into an equivalent sector value.

5. Cache memory apparatus according to claim 4, characterised in that the converting means comprise means (64) for dividing the emulated track position by the number of bytes per sector (72) in the disk (26) to generate an equivalent sector value.

6. Cache memory apparatus according to claim 4 or 5, characterised in that each magnetic disk unit (26) has means (27A) for producing a sector signal representing the sector of the magnetic disk which is under the magnetic heads of the disk unit and characterised by means (66) for comparing the sector signal with the equivalent sector value; and means (71) for enabling the reading of records stored on the disk track to the central processing unit (10) in response to the comparing means.

7. Cache memory apparatus according to claim 6, characterised in that the means for converting (64) includes means for producing a sector residual value representing the number of bytes after the sector value at which the record, upon which reorientation occurs, is stored.

8. Cache memory apparatus according to claim 7, characterised by means (67) for delaying operation of the enabling means (71) for a time determined by the sector residual value.

9. Cache memory apparatus according to claim 6, 7 or 8, characterised in that the enabling means (71) is operable for a given time window, and in that means for detecting the count field of the record desired for reorientation is enabled during this time window.

**Patentansprüche**

1. Cache-Speicher für ein Datenverarbeitungssystem, bei dem eine zentrale Datenverarbeitungseinheit (10) auf Magnetplatteneinheiten (26) gespeicherte Daten verarbeitet, mit einem Cache-Festspeicher (34) mit Einrichtungen (60) zum Speichern einer Tabelle emulierter Spurpositionen, die je eine äquivalente Drehstellung darstellen, an der im Cache-Speicher (34) gespeicherte Aufzeichungen auf einer Spur (72) einer Magnetplatte (26) gespeichert werden, gekennzeichnet durch Einrichtungen (12, 24) zur Reorientierung der Operation eines Programms von im Cache-Speicher gespeicherten Aufzeichnungen auf entsprechende auf einer Platteneinheit gespeicherte Aufzeichnungen entsprechend der emulierten Spurstellung der Aufzeichnung bezüglich derjenigen, zu der die Reorientierung erfolgt, wobei die Einrichtung (12, 24) zur Reorientierung eine Einrichtung (61) zur Wahl der emulierten Spurstellung der Aufzeichnung aus der Tabelle (60) unmittelbar vor der auf der Platte gespeicherten Aufzeichnung enthält, die durch ein Programm zu verarbeiten ist, wodurch dir Reorientierung innerhalb einer Umdrehung der Magnetplatte ausgeführt wird, auf der die entsprechenden Aufzeichnungen gespeichert sind.

2. Cache-Speicher nach Anspruch 1, dadurch gekennzeichnet, daß die emulierten Spurstellungen je die Anzahl von Bytes nach der Indexmarke auf der Plattenspur darstellen, auf der die Speicherung der entsprechenden Aufzeichnung beginnt.

3. Cache-Speicher nach Anspruch 1, gekennzeichnet durch eine Einrichtung (51) zur anfänglichen Speicherung einer emulierten Spurstellung entsprechend der Sektornummer der ersten im Cache-Speicher gespeicherten Aufzeichnung und eine Einrichtung (54) zum Speichern einer erhöhten Zahl, wenn jedes Byte von einer Spur einer Magnetplatte gelesen wird, zur Erzeugung einer Reihe emulierter Spurstellungswerte, die je die Zahl der Bytes von der Indexmarke darstellen, an der die entsprechende, im Cache-Speicher gespeicherte Aufzeichnung auf der Platte beginnt.

4. Cache-Speicher nach Anspruch 1, dadurch gekennzeichnet, daß die Reorientierungseinrichtung (12, 24) Einrichtungen (64, 65) zur Umwandlung der emulierten Spurstellung in einen äquivalenten Sektorwert enthält.

5. Cache-Speicher nach Anspruch 4, dadurch gekennzeichnet, daß die Umwandlungseinrichtung eine Einrichtung (64) zur Teilung der emulierten Spurstellung durch die Zahl der Bytes pro Sektor (72) in der Platte (26) zur Erzeugung eines äquivalenten Sektorwertes enthält.

6. Cache-Speicher nach Anspruch 4 oder 5, dadurch gekennzeichnet, daß jede Magnetplatteneinheit (26) eine Einrichtung (27 A) zur Erzeugung eines Sektorsignals enthält, das den Sektor der Magnetplatte darstellt, der sich unter den Magneköpfen der Platteneinheit befindet, sowie ferner gekennzeichnet durch eine Einrichtung (26) zum Vergleichen des Sektorsignals mit dem äquivalenten Sektorwert und durch eine Einrichtung (71) zur Freigabe des Lesens der auf der Plattenspur gespeicherten Aufzeichnungen zur zentralen Datenverarbeitungseinheit (10) als Antwort auf die Vergleichseinrichtung.

7. Cache-Speicher nach Anspruch 6, dadurch gekennzeichnet, daß die Umwandlungseinrichtung (64) eine Einrichtung zur Erzeugung eines Sektor-Restwertes enthält, der die Zahl von Bytes nach dem Sektorwert darstellt, an dem die Aufzeichnung, auf welche hin die Reorientierung eintritt, gespeichert ist.

8. Cache-Speicher nach Anspruch 7, gekennzeichnet durch eine Einrichtung (67) zur Verzögerung der Operation der Freigabeeinrichtung (71) um eine durch den Sektor-Restwert bestimmte Zeit.

9. Cache-Speicher nach einem der Ansprüche 6, 7 oder 8, dadurch gekennzeichnet, daß die Freigabeeinrichtung (71) für ein gegebenes Zeitfenster arbeitsfähig ist, und daß eine Einrichtung zur Erfassung des für die Reorientierung gewünschten Zählfeldes der Aufzeichnung während diese Zeitfensters freigegeben wird.

**Revendications**

1. Système à mémoire cache dans un système de traitement de données dans lequel un module de traitement central (10) traite des enregistrements de données mémorisés sur des modules à disques magnétiques (26), comprenant une mémoire cache à état solide (34) comprenant des moyens (60) pour mémoriser une table de positions de pistes simulées dont chacune représente la position en rotation équivalente pour laquelle des enregistrements de données mémorisés dans la mémoire cache (34) sont mémorisés sur une piste (72) d'un disque magnétique (26), caractérisé par des moyens (12, 24) pour réorienter le fonctionnement d'un programme à partir des enregistrements mémorisés dans la mémoire cache vers des enregistrements correspondants mémorisés sur un module de disque en réponse à la position de piste simulée de l'enregistrement par rapport à laquelle la réorientation prend place, les moyens (12, 24) de réorientation comprenant des moyens (61) pour sélectionner à partir de la table (60) la position de piste simulée de l'enregistrement immédiatement avant l'enregistrement mémorisé sur le disque qui doit être traité par un programme, d'où il résulte que la réorientation est réalisée en tour du disque magnétique sur lequel les enregistrements correspondants sont mémorisés.

2. Système à mémoire cache selon la revendication 1, caractérisé en ce que les positions de pistes simulées représentent chacune le nombre de multiplets après le repère sur la piste du disque auquel la mémorisation de l'enregistrement correspondant commence.

3. Système à mémoire cache selon la revendication 1, caractérisé par des moyens (51) pour mémoriser initialement une position de piste simulée correspondant au numéro de secteur du premier enregistrement mémorisé dans la mémoire cache et des moyens (54) pour mémoriser un nombre incrémenté tandis que chaque multiplet est lu à partir d'une piste sur un disque magnétique pour produire une succession de valeurs de positions de pistes simulées dont chacune représente le nombre de multiplets à partir du repère auquel l'enregistrement correspondant mémorisé dans la mémoire cache commence sur le disque.

4. Appareil à mémoire cache selon la revendication 1, caractérisé en ce que les moyens de réorientation (12, 24) comprennent des moyens (64, 65) pour convertir la position de piste simulée en une valeur de secteur équivalente.

5. Système à mémoire cache selon la revendication 4, caractérisé en ce que les moyens de conversion comprennent des moyens (64) pour diviser la position de piste simulée par le nombre de multiplets par secteur (72) dans le disque (26) pour produire une valeur de secteur équivalente.

6. Système à mémoire cache selon l'une des revendications 4 ou 5, caractérisé en ce que chaque module de disque magnétique (26) comprend des moyens (27A) pour produire un signal de secteur représentant le secteur du disque magnétique qui se trouve sous les têtes magnétiques du module à disque et caractérisé par des moyens (66) pour comparer le signal de secteur à la valeur de secteur équivalente; et des moyens (71) pour valider la lecture des enregistrements mémorisés sur la piste de disque vers le module de traitement central (10) en réponse aux moyens de comparaison.

7. Système à mémoire cache selon la revendication 6, caractérisé en ce que les moyens de conversion (64) comprennent des moyens pour produire une valeur de secteur résiduelle représentant le nombre de multiplets après la valeur de secteur pour laquelle l'enregistrement, à la suite duquel la réorientation prend place, est mémorisé.

8. Appareil à mémoire cache selon la revendication 7, caractérisé par des moyens (67) pour retarder le fonctionnement des moyens de validation (71) pendant une durée déterminée par la valeur résiduelle de secteur.

9. Appareil à mémoire cache selon la revendication 6, 7 ou 8, caractérisé en ce que les moyens de validation (71) peuvent fonctionner pendant une fenêtre de temps donnée, et en ce que des moyens pour détecter les champs de comptage de l'enregistrement désiré pour une réorientation sont validées pendant cette fenêtre temporelle.

## Fig.1

HOST 10

CHANNEL INTERFACE    16

*Fig. 2*

BUFFER
DATA
PATH

DIRECT
DATA
PATH

12
DIRECTOR
0

12
DIRECTOR
1

CONTROL
PATH

STAGE / DESTAGE
DATA PATH

BUFFER
30

BUFFER
CONTROL
32

20

FILE INTERFACE

24 DASD

*Fig. 3*

HOST INTERFACE
CHANNELS 16

12
DIRECTOR
0
CI

DIRECTOR
1
CI

DIRECTOR
2
CI

14
DIRECTOR
3
CI

FILE
INTERFACE
20

28    28    28    28

36    0  1  2  3
35    BUS CONTROL
30    CACHE
      BUFFER

42    0  1  2  3
32    BUFFER
      MANAGER

2

Fig. 4A

**Fig.4B**

**Fig.5**

HEADER | ... | H.A. | R0 COUNT | R0 DATA | R1 COUNT | R1 DATA | R2 COUNT | R2 DATA | ...

70A, 70B

**Fig. 6**

TRACK

INDEX 73

$ETP_{HA}$  $ETP_{R0}$  $ETP_{R1}$  $ETP_{R2}$

H.A. | R0 COUNT | R0 DATA | R1 COUNT | R1 DATA | R2 COUNT | R2 DATA

GAPS

69 — TIMING WINDOW

68

75

**Fig. 7A**

DIRECTOR WAITS 67

SECTOR RESIDUAL VALUE

ISSUE READ COMMAND TO DRIVE

TRACK SECTOR | SECTOR 0 | SECTOR 1 | SECTOR 2 | SECTOR 3

**Fig. 7B**

INTERRUPT SECTOR REACHED

**Fig. 7C**

5